Europäisches Patentamt

European Patent Office

Office européen des brevets

(11) Publication number: **0 261 711**

**A2**

(12) **EUROPEAN PATENT APPLICATION**

(21) Application number: **87201624.1**

(22) Date of filing: **28.08.87**

(51) Int. Cl.⁴: **F16N 7/34** , F16T 1/38

(30) Priority: **19.09.86 IT 2314686 U**

(43) Date of publication of application:
**30.03.88 Bulletin 88/13**

(84) Designated Contracting States:
**AT BE CH DE ES FR GB GR IT LI LU NL SE**

(71) Applicant: **METAL WORK S.p.A.**
**Via Segni, 7**
**I-25062 Concesio (Brescia)(IT)**

(72) Inventor: **Fausto, Rodella**
**Via 8 Marzo, 7**
**I-25060 Collebeato (Brescia)(IT)**
Inventor: **Adriano, Albertini**
**Via Puglie, 22/A**
**I-25069 Villa Carcina (Brescia)(IT)**

(74) Representative: **Martegani, Franco et al**
**Ingg. GUZZI e RAVIZZA S.r.l. Via Boccaccio, 24**
**I-20123 Milano(IT)**

(54) **Improved modular assembly of treatment and control elements for compressed air distribution systems.**

(57) A package of treatment and control elements, for example for filtering and discharging condensate, pressure regulation and lubricant dispersal for compressed air distribution systems comprises a plurality of modular units interlocked by connection means in the region of respective heads each traversed by a bore for the passage of compressed air. Said connection means comprise raised portions formed on lowered stubbed opposed faces of each of the said heads, each of which portions is adapted to abut a matching portion of the head of the adjacent unit, the ends of said portions being shaped with inclined surfaces which are engaged by matching surfaces of seats formed in a pair of opposed blocks mutually locked by through screws.

Tav. I

Fig. 1

# IMPROVED MODULAR ASSEMBLY OF TREATMENT AND CONTROL ELEMENTS FOR COMPRESSED AIR DISTRIBUTION SYSTEMS

The present invention relates to certain improvements made to a modular assembly of elements for the treatment and control of air in compressed air distribution systems. Typically, it can filter and discharge the condensate, regulate the pressure and introduce a certain amount of a lubricant liquid into the air circulating in a system.

As it is well-know to persons with ordinary skill in the art, compressed air distribution systems, for example proximal to processing stations forming part of production lines in factories, must firstly be provided with a device able to discharge the condensate that forms when humid air is compressed.

It is then necessary to employ a device by which the pressure of the air sent into the system can be regulated in relation to real requirements, which depends on the use to which the air is put.

In addition, it is often essential to disperse a controlled amount of lubricant liquid into the compressed air, particularly when pneumatic tools are to be operated.

To satisfy such requirements it is known to embody a single assembly comprising, most commonly, three modular units adapted respectively to filter and discharge the condensate, to regulate the pressure and to disperse a lubricant into the compressed air delivered by the system.

The embodiment of such a modular assembly entails solving the technical problem connected with the mounting of the three units, which, as well as being straightforward and fast and allowing rapid substitution and/or mantainance of the said single components, must ensure that the entire assembly is positioned in a stable manner.

The overall object of the present invention is to embody an improved modular assembly such as it is able satisfactorily to solve the aforementioned technical problem.

To this end, the invention embodies a assembly of elements for treatment and control, as for example filtration and discharge of condensate, for pressure regulation and for lubricant dispersal, for compressed air distribution system, of the type comprising three modular units interlocked by connection means in the region of respective heads, each traversed by a bore for the passage of compressed air, wherein the said connection means comprise raised portions formed on stubbed opposed faces of each of said heads, each of which portions is adapted to abut a corresponding portion of the head of an adjacent unit, the ends of said portion being shaped with inclined surfaces which are engaged by corresponding surfaces of seats formed in a pair of blocks mutually locked by through screws.

Preferably, cooperating with the said units are terminal lugs connected to them through the intermediary of the same connection means as are mentioned above, the said terminal lugs being wall-bracketable in a stable manner and each provided with a pair of upper an lower flanges the short sides of which have a broken line shape.

The structural and functional characteristics of the invention, and its advantages over the known art, will be more apparent from an examination of the following description, referred to the appended drawings which show an example of a modular assembly embodied according to the innovative principles of fhe invention.

In the drawings:

Figure 1 is an enlarged perspective view illustrating the assembly in question; and

Figures 2 and 3 are two enlarged particulars in section, illustrating the mounting sequence for the modular components forming the assembly shown in Figure 1.

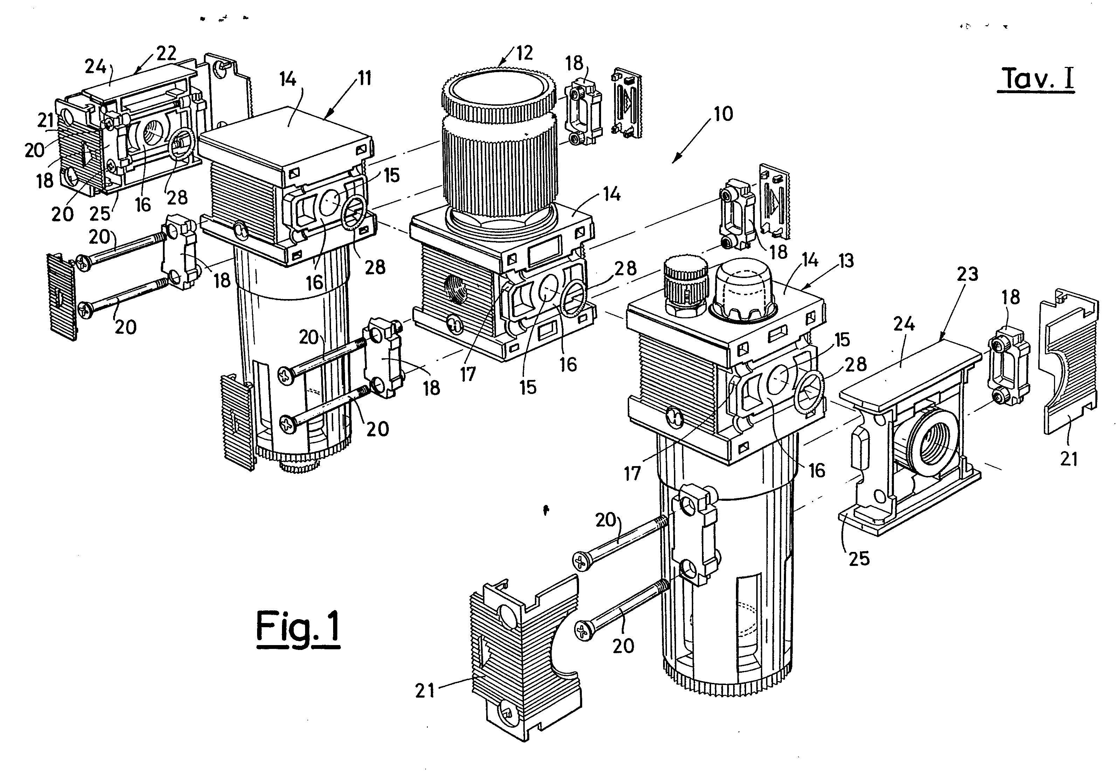

With reference to Figure 1 of the drawings, the assembly according to the invention is indicated overall by 10 and consists structurally of three modular units, one for filtering and discharging condensate, one for pressure regulation and one for lubricant dispersal, indicated respectively by 11, 12 and 13.

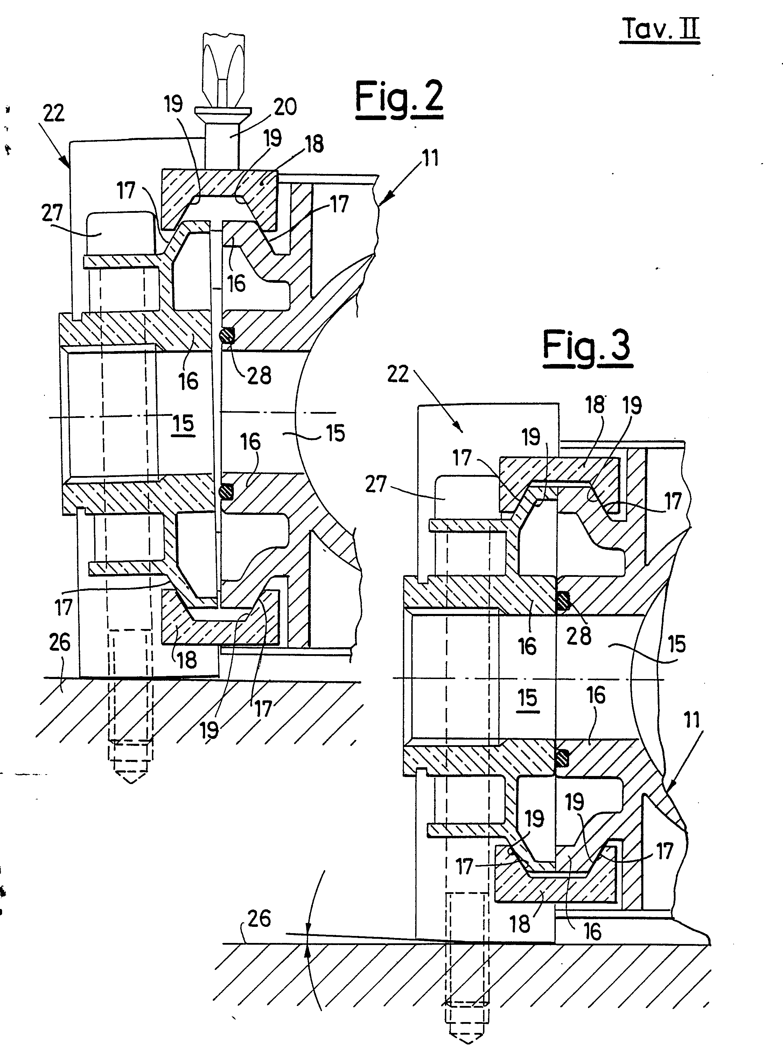

Each of the units 11, 12 and 13 is provided with a head 14 having generally parallelepiped shape and traversed axially by a bore 15 for the passage of compressed air. The heads 14 also serves for the mutual connection of the units 11, 12 and 13. For such purpose, on two stubbed opposed faces of each head 14, in the region of the outlet of the bore 15, there is formed a raised portion 16 extending diametrically with respect to the bore 15, the opposite ends of which have inclined surfaces 17 (Figure 2 and 3).

When the assembly is mounted, the portions 16 abut each other and are stably interlocked by means of opposed blocks 18 internally shaped with surfaces 19 inclined in a manner matching the surfaces 17 of the portions 16. In this way, the locking of the two opposed blocks 18 by a pair of screws 20 will cause, as a result of the wedge-action shown in Figures 2 and 3, the stable connection of the portions 16 and, in consequence, of the heads 18 solid therewith of the units 11,12 and 13. The interposing of a seal ring 20 assures a leak-free passage of the compressed air through the bores 15.

The numeral 21 indicates a series of appearance-enhancement masks which are latchingly applied to the various components they are intended to cover.

As clearly appears from Figure 1 of the drawings, the same locking system that has been described above is used for applying respective threaded terminal lugs 22, 23 to the lateral units 11, 13.

A further characteristic of the invention is that the terminal lugs 22, 23 are embodied with flanges 24, 25, upper and lower respectively, the short side of which, i.e. the sides which will abut a wall 26 to which the assembly is fixed by means of screws 27, are not perfectly straight but have an inclined profile (with an inclination for example of few degrees) so as to provide a divarication of the parts and a certain clearance between the said flanges and the wall such as it allows the terminal lugs 22, 23 to take up the position shown in Figure 2 when the screws 20 are slackened. In consequence, the single units 11, 12 and 13 can be demounted leaving the terminal lugs 22, 23 fixed to the wall. The deflection of the fixing screws 27 permits the parts to be brought together correctly when the screws 20 are tightened.

The objects mentioned in the introductory part of the description are thus attained.

## Claims

1) Package of treatment and control elements, for example for filtering and discharging condensate, pressure regulation and lubricant dispersal for compressed air distribution systems, of the type comprising a plurality of modular units interlocked by connection means in the region of respective heads each traversed by a bore for the passage of compressed air, wherein the said connection means comprise raised portions formed on lowered stubbed opposed faces of each of the said heads, each of which portions is adapted to abut a matching portion of the head of the adjacent unit, the ends of said portions being shaped with inclined surfaces which are engaged by matching surfaces of seats formed in a pair of opposed blocks mutually locked by through screws.

2) Package as described in claim 1, wherein cooperating with said units are terminal lugs attached thereto through the intermediary of the same connection means as have been mentioned above.

3) Package as described in claim 2, wherein the said terminal lugs are stably wall-bracketed and are each provided with a pair of inclined flanges, upper and lower respectively, for wall-abutment in order to cause a divarication of said terminal lugs with respect to the adjacent unit.

Tav. I

Fig.1

0 261 711

## Fig.2

## Fig.3